# EUROPÄISCHE PATENTSCHRIFT

(11) **EP 1 243 529 B1**
(45) Veröffentlichungstag und Bekanntmachung des Hinweises auf die Patenterteilung: **11.08.2004**
(21) Anmeldenummer: 01129828.8
(22) Anmeldetag: 14.12.2001
(51) Int. Cl.: B65G 37/00, G11B 23/00

(54) **Einrichtung zum Zuführen und/oder Wegführen von mit Objekten gefüllten Magazinen**
Device for supplying and/or removing magazines filled with objects
Dispositif d'approvisionnement et/ou d'évacuation de magasins remplis d'objets

(30) Priorität: 21.03.2001 DE 10113898
(43) Veröffentlichungstag der Anmeldung: 25.09.2002
(73) Patentinhaber: Werner Kammann Maschinenfabrik GmbH., 32257 Bünde (DE)
(72) Erfinder: Rodefeld, Dietrich, 49176 Hilter (DE)
(74) Vertreter: Lippert, Stachow, Schmidt & Partner

(56) Entgegenhaltungen:
- EP-A- 0 909 728
- EP-A- 0 949 169

## Beschreibung

Die Erfindung betrifft eine Einrichtung zum Zuführen und/oder Wegführen von für die Aufnahme von einzelnen Objekten bestimmten Magazinen an einer Vorrichtung zum Behandeln und/oder Handhaben dieser Objekte gemäß dem Oberbegriff des Anspruchs 1.

Bei den Vorrichtungen zum Behandeln und/oder Handhaben dieser Objekte kann es sich beispielsweise um Maschinen zum Bedrukken, Verpacken od. dgl. von CDS und/oder anderen Objekten handeln. Im Folgenden wird die Erfindung insbesondere im Zusammenhang mit einer Druckmaschine beschrieben, ohne dass damit eine Beschränkung verbunden sein soll.

EP 0 909 728 A1 beschreibt eine Vorrichtung zum Bedrucken von CDs, die mit einer Einrichtung für den Zutransport der zu bedruckenden Objekte und für den Abtransport der bedruckten Objekte versehen ist. Diese Objekte werden in Form eines Stapels als Magazin zugeführt. Letzteres besteht im Wesentlichen aus einem Fuß oder Sockel, von dem aus sich ein Dorn, die sogenannte Spindel, nach oben erstreckt, auf dem die jeweils mit einer zentralen Öffnung versehenen Objekte aufgesteckt werden. Zum Zwecke des Einführens der Objekte in die Aufnahmen der Druckmaschine werden sie von dem Stapel abgenommen und dabei vereinzelt und nach vollständiger Bedruckung wieder in einem Magazin in Form eines Stapels gesammelt, das aus der Maschine herausgeführt wird. Im allgemeinen wird dabei so verfahren, dass die leeren Magazine, aus denen die zu bedrukkenden Objekte einzeln herausgenommen worden waren, anschließend wieder zum Sammeln eines Stapels von bedruckten Objekten verwendet werden.

Die Einrichtung gemäß EP 0 909 728 A1 weist zwar auch ein Transportband auf, welches sowohl dem Zuführen der mit zu bedruckenden Objekten gefüllten Magazine als auch dem Wegführen der mit den bedruckten Objekten gefüllten Magazinen dient. Die Einrichtung zum Zuführen und Wegführen der Magazine ist jedoch einigermaßen kompliziert, da sie einige zusätzliche Funktionen ausführt, die in vielen Fällen nicht erforderlich sind. Zudem ist sie für den nachträglichen Anbau an bereits vorhandene und in der Produktion befindliche Maschinen wenig geeignet.

Der Erfindung liegt die Aufgabe zugrunde, eine Einrichtung gemäß dem Oberbegriff des Anspruchs 1 so auszubilden, dass die Nachteile bekannter Einrichtungen beseitigt, insbesondere das Zuführen und Wegführen der Magazine für die zu bedruckenden und die bedruckten Objekte mit einfachen Mitteln möglich ist derart, dass die Anzahl der erforderlichen Bedienungspersonen verringert und die Sicherheit für die mit der Bedienung befassten Personen vergrößert wird. Diese Aufgabe wird durch die Lehre gemäß Anspruch 1 gelöst.

Die Erfindung lässt sich dahingehend zusammenfassen, dass ein zusätzliches Transportelement vorgesehen ist, welches in Transportrichtung vor den beiden schrittweise vorbewegbaren Drehtellern angeordnet ist, die dem Zuführen der Magazine zur Vereinzelungsstation bzw. dem Wegführen der Magazine von der Sammelstation dienen und eine gewisse Pufferfunktion haben. Das dritte Transportelement überbrückt einmal den Abstand zwischen den beiden Drehtellern einerseits und dem Förderband für das Zuführen und Wegführen der Magazine andererseits, welches im allgemeinen außerhalb der eigentlichen Maschine angeordnet ist, so dass für die Bedienungsperson keine Notwendigkeit besteht, die mit den zu bedruckenden Objekten gefüllten Magazine in das ggf. als Drehteller ausgebildete erste Förderelement manuell einzusetzen und die mit dem bedruckten Objekt versehene Magazine aus dem ggf. ebenfalls als Drehteller ausgebildeten zweiten Förderelement manuell herauszunehmen. Weiterhin überbrückt der am dritten Transportelement schwenkbar angebrachte Träger den Abstand zwischen den beiden Drehtellern, so dass es nicht mehr erforderlich ist, das leere Magazin aus dem Drehteller für die zu bedruckenden Objekte manuell auf den Drehteller für die bedruckten Objekte umzusetzen. Somit besteht keine Notwendigkeit, dass eine Bedienungsperson irgendwelche Handhabungen im Bereich von laufenden Maschinenteilen vornimmt.

Weitere Merkmale ergeben sich aus der folgenden speziellen Beschreibung und den Unteransprüchen.

In der Zeichnung ist ein Ausführungsbeispiel der Erfindung im Schema dargestellt. Es zeigen:
- Fig. 1: die perspektivische Ansicht einer Druckmaschine, welche mit einer Einrichtung zum Zuführen und Wegführen von für die Aufnahme von Einzelobjekten bestimmten Magazinen versehen ist,
- Fig. 2: eine Draufsicht der Druckmaschine gemäß Fig. 1, bei welcher jedoch Teile der Verkleidungen weggelassen sind,
- Fig. 3A - 3F: jeweils einen Ausschnitt aus Fig. 2 in größerem Maßstab, wobei die zusammenwirkenden Teile unterschiedliche Positionen in Abhängigkeit von den aufeinanderfolgenden dargestellten Arbeitsschritten einnehmen.

Bei dem in der Zeichnung gezeigten Ausführungsbeispiel handelt es sich um eine Druckmaschine zum Bedrucken von Objekten in Form von Compact Discs (CDs). Diese Druckmaschine ist mit sechs Siebdruck-Stationen A-F sowie mit weiteren Behandlungsstationen, beispielsweise Trocknungsstationen, Stationen zum Entstatisieren der CDs usw. sowie einer Eingabestation G und einer Entnahmestation I versehen. Sie weist ferner als Transportelement eine schrittweise umlaufende Ringscheibe 10 auf, die mit Aufnahmen 12 für die Objekte 14 versehen ist. Die in den Aufnahmen 12 liegenden Objekte werden durch die in Richtung des Pfeiles 16 schrittweise umlaufende Ringscheibe von Behandlungsstation zu Behandlungsstation transportiert.

Die zu behandelnden Objekte werden der Vorrichtung in Magazinen 18 zugeführt, die in üblicher Weise im wesentlichen aus einem Sockel 20, der oberseitig einen Rand 22 aufweist, und einem im Sockel 16 zentrisch angebrachten Dorn 24 bestehen, welcher sich durch die Mittenöffnungen der im Magazin aufeinanderliegenden CDs erstreckt. Derartige Magazine und die stapelförmige Anordnung der CDs 14 in denselben sind allgemein bekannt.

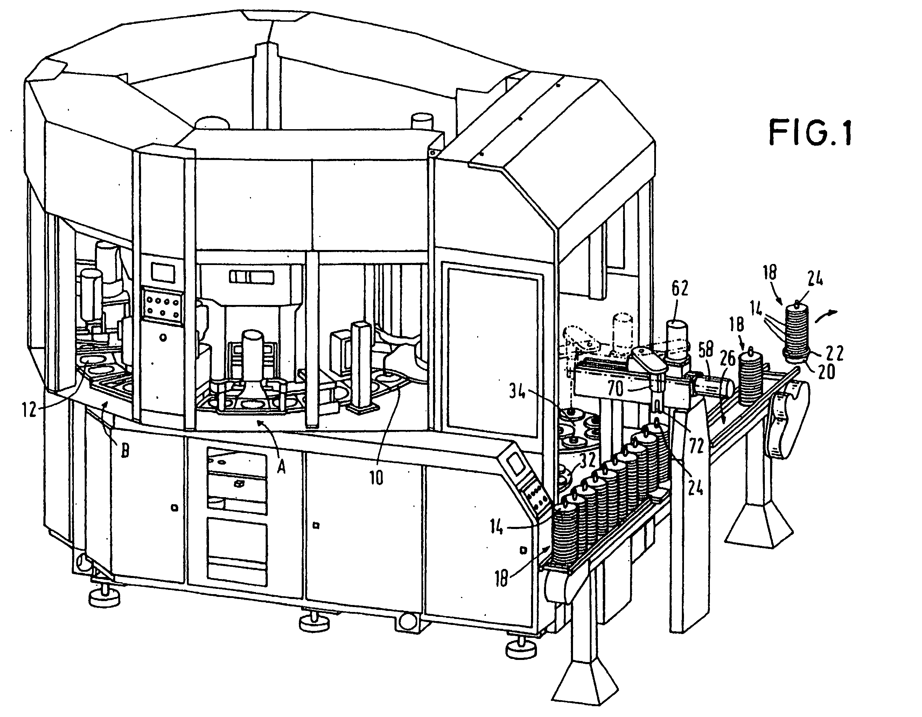

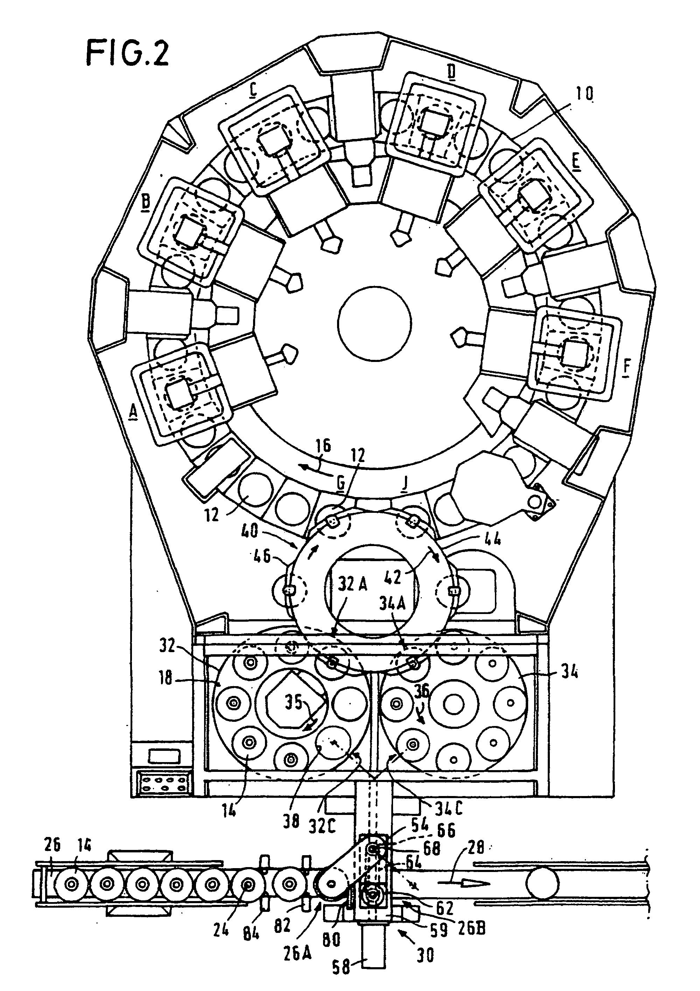

Die in der Druckmaschine zu behandelnden CDs werden, wie dies insbesondere in den Fig. 1 und 2 dargestellt ist, jeweils als von den vorbeschriebenen Magazinen 18 gehaltenen Stapel auf ein Förderband 26 gestellt, welches in Richtung des Pfeiles 28 vorzugweise schrittweise umläuft. Diesem Förderband ist ein mit einem Schlitten 54 versehener hin- und herbewegbarer Linearförderer 30 zugeordnet, welcher den Abstand zwischen dem Förderband 26 und zwei Drehtellern 32 bzw. 34 überbrückt, die in Richtung des Pfeiles 35 bzw. 36 schrittweise rotieren. Jeder dieser Drehteller 32, 34 ist mit acht Halterungen 38 für jeweils ein Magazin 18 versehen. Der Drehteller 32 nimmt ausschließlich Magazine 18 auf, die zu bedruckende Objekte enthalten, während der Drehteller 34 ausschließlich für die Aufnahme von Magazinen mit bedruckten Objekten bestimmt ist.

Der Abstand zwischen den beiden Drehtellern 32, 34 einerseits und des durch die Ringscheibe 10 gebildeten Transportmittels mit den Aufnahmen für die einzelnen Objekte 14 andererseits wird durch eine Transfereinrichtung 40 überbrückt, welche mit einem heb- und senkbaren und um eine vertikale Achse schrittweise in Richtung des Pfeiles 42 umlaufende Transferelement 44 versehen ist, an dessen Unterseite in gleichmäßigen Abständen über den Umfang verteilt sechs in üblicher Weise ausgebildete Vakuumhalter 46 angebracht sind, die jeweils drei an eine Vakuumquelle anschließbare kurze Rohrabschnitte aufweisen.

Jedes der vom Linearförderer 30 in noch zu beschreibender Weise der Wechelstation 32C des Drehtellers 32 zugeführte Magazin 18 gelangt nach sechs Schaltschritten in Richtung des Pfeiles 35 in die Vereinzelungsstation 32A. Letztere ist mit bekannten, nicht dargestellten auf- und abbewegbaren Stützmitteln versehen, welche den im Magazin befindlichen Stapel aus CDs untergreifen und schrittweise derart anheben, daß die jeweils zuoberst in dem Stepel befindliche CD sich in einer bestimmten Höhe befindet, in welcher sie vom jeweils oberhalb des Stapels in der Vereinzelungsstation 32a befindlichen Vakuumhalter 46 des Transferelementes 44 erfaßt wird, wenn letzteres abgesenkt wird. Im Verlauf der folgenden Aufwärtsbewegung des Transferelementes 40 wird die jeweils zu oberst befindliche CD des Stapels des in der Vereinzelungsstation 32A befindlichen Magazins abgehoben und im Verlauf von zwei aufeinanderfolgenden Schaltschritten des Transferelementes 44 von jeweils 60° über die Aufnahme 12 der Ringscheibe 10 transportiert, welche sich jeweils in der Eingabestation G befindet. Danach wird das Transferelement 44 abgesenkt, so daß die vom Vakuumhalter des Transferelementes 44 gehaltenen CD in diese Aufnahme 12 gelangt. Nach Abschalten des Unterdrucks an diesem Vakuumhalter wird das Transferelement angehoben, wobei die CD in der Halterung 12 der Aufnahmesetation G verbleibt. In angehobenem Zustand wird das Transferelement 44 um einen Transportschritt, also um 60°, weiterbewegt. Gleichzeitig kann auch die umlaufende Ringscheibe 10 der Druckmaschine in Richtung des Pfeiles 16 um einen Transportschritt weitergeschaltet werden, welcher dem doppelten Abstand zweier unmittelbar benachbarter Aufnahmen 12 entspricht, so daß nunmehr die entgegen der Transportrichtung 16 übernächste Halterung 12, die vorher entleert worden war, in die Eingabestation G gelangt.

Nachdem das in der Vereinzelungsstation 32A befindliche Magazin 18 durch aufeinanderfolgendes Transferieren sämtlicher CDs in Halterungen 12 der Ringscheibe 10 entleert worden ist, wird - ggf. nach Durchführen weiterer Manipulationen, die jedoch für das Verständnis der Erfindung ohne Bedeutung sind - der Drehteller 32 um einen Schaltschritt von 45° in Richtung des Pfeiles 35 rotiert, so daß das nunmehr leere Magazin aus der Vereinzelungsstation 32A herausgeführt und das entgegen der Rotationsrichtung 35 folgende gefüllte Magazin in die Vereinzelungsstation 32A gelangt. Das geleerte Magazin gelangt bei diesem Schaltschritt des Drehtellers 32 zunächst in eine Zwischenstation und von dieser durch den nächsten Schaltschritt in die Wechselstation 32C, in welcher das leere Magazin von dem Drehteller 32 abgehoben und in eine in der Wechselstation 34C jeweils befindliche leere Halterung des Drehtellers 34 gesetzt wird. Dieses leere Magazin gelangt nach sechs Transportschritten des Drehtellers 32 von jeweils 45° in Richtung des Pfeiles 36 in die Sammelstation 34A, die über die Transfereinrichtung 40 mit der Entnahmestation I der Druckmaschine verbunden ist, in welcher die fertig behandelten CDs, nachdem sie zweimal die durch die Ringscheibe 10 definierte Transportbahn durchlaufen haben, aus der jeweiligen Aufnahme 12 herausgenommen werden.

Das in der Sammelstation 34A jeweils befindliche Magazin ist derart relativ zur Station I, in welcher die bedruckten CDs aus der jeweils darin befindlichen Halterung herausgenommen werden, und zum Transferelement 44 ausgerichtet, daß jener Vakuumhalter 46 des umlaufenden Transferelementes 44, der vor dem letzten Transportschritt in Richtung des Pfeiles 42 eine zu bedruckende CD in der Aufnahmestation G in eine dort befindliche Halterung abgelegt hatte, im Verlauf der Absenkbewegung des Transferelementes 40 mit jener CD in Berührung kommt, die in der jeweils in der Entnahmestation I befindlichen Halterung 12 liegt und diese CD bei eingeschaltetem Unterdruck im Verlauf der darauf folgenden Aufwärtsbewegung des Transferelementes aus der Halterung heraushebt.

Beim folgenden Transportschritt des Transferelementes 44 in Richtung des Pfeiles 42 wird die bedruckte CD aus der Entnahmestation I heraustransportiert und beim darauffolgenden Transportschritt über das in der Sammelstation 34A befindliche Magazin gebracht, und, nachdem das Transferelement 44 wieder abgesenkt worden ist, an dieses Magazin abgegeben, indem das Vakuum abgeschaltet und daraufhin die CD nach unten fällt und dabei über den Dorn 24 des Magazins gleitet, bis es letztlich auf dem Sockel 20 des Magazins, einem den Stapel tragenden Zwischenstück oder einer bereits darauf befindlichen CD aufliegt.

Wenn das in der Sammelstation 34A befindliche Magazin gefüllt ist, wird der Drehteller 34 in Richtung des Pfeiles 36 um 45° weitergesschaltet, so daß das entgegen der Rotationsrichtung 36 folgende leere Magazin des Drehtellers in die Sammelpostion 34A gelangt. Mit dem dann folgenden Schaltschritt des Drehtellers 34 gelangt das Magazin in die Wechselstation 34C, in welcher es dann in noch zu beschreibender Weise durch den Linearförderer 30 vom Drehteller 34 abgenommen und zum Förderband 26 transportiert wird.

Nach dem Ablegen einer CD in dem jeweils in der Sammelstation 34A befindlichen Magazin wird das Transferelement 44 wieder angehoben, worauf der zu diesem Zeitpunkt in der Sammelstation 34A befindliche Vakuumhalter im Verlauf des folgenden Schaltschrittes in Richtung des Pfeiles 42 wieder in die dem Drehteller 32 zugeordnete Vereinzelungsstation 32A gelangt, um in der bereits beschriebenen Weise erneut eine CD aus dem dort jeweils befindlichen Magazin aufzunehmen und im Verlauf der beiden folgenden Transportschritte über die dann in der Eingabestation G befindliche Aufnahme 12 zu transportieren und in dieser abzulegen.

Der Linearförderer 30, welcher auf einem höheren Niveau als die beiden Drehtellern 32, 34 und das Förderband 26 angeordnet ist, weist neben dem mit einer Spindelmutter versehenen hinund herbewgbaren Schlitten 54 eine stationäre Spindel 56 auf, die durch einen Elektromotor 58 angetrieben wird, der an einer Führung 59 für den Schlitten 54 angebracht ist. Die Bewegungsbahn des Schlittens 54 und damit die Spindel 56 verlaufen symmetrisch zu den beiden Drehtellern 32, 34, der Transfereinrichtung 40 und der Transport-Ringscheibe 10, wie dies insbesondere der Fig. 2 entnehmbar ist.

An dem der Transfereinrichtung 40 zugekehrten Ende des Schlittens 54 ist ein in horizontaler Ebene schwenkbarer Arm 60 angebracht, der durch einen Elektromotor 62 angetrieben wird. Dazu ist die Abtriebswelle des vom Schlitten 54 getragenen Motors 62 mit einem Ritzel versehen, welches eine endlose Kette oder einen endlosen Zahnriemen 64 antreibt, die bzw. der mit einem Zahnrad 66 in Eingriff ist, welches fest mit einer Welle 68 verbunden ist, an deren einem Ende der Schwenkarm 60 befestigt ist.

Nahe dem freien Ende des Schwenkarmes 60 ist an diesem eine Zylinder-Kolben-Einheit 70 befestigt. Am freien Ende der Kolbenstange dieser Einheit 70 ist ein Greifer 72 angebracht, der durch entsprechende Betätigung der Kolben-Zylinder-Einheit auf- und abbewegbar ist.

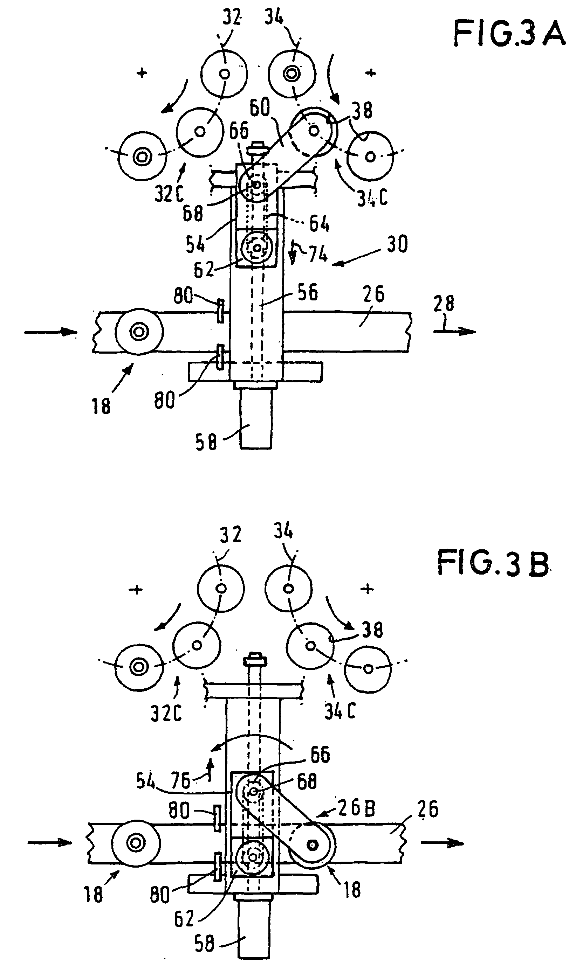

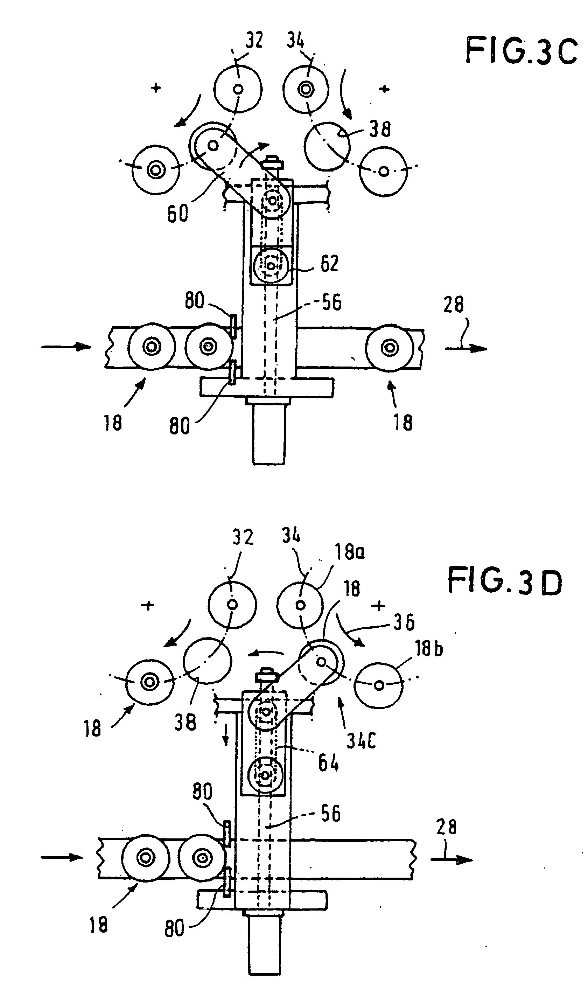

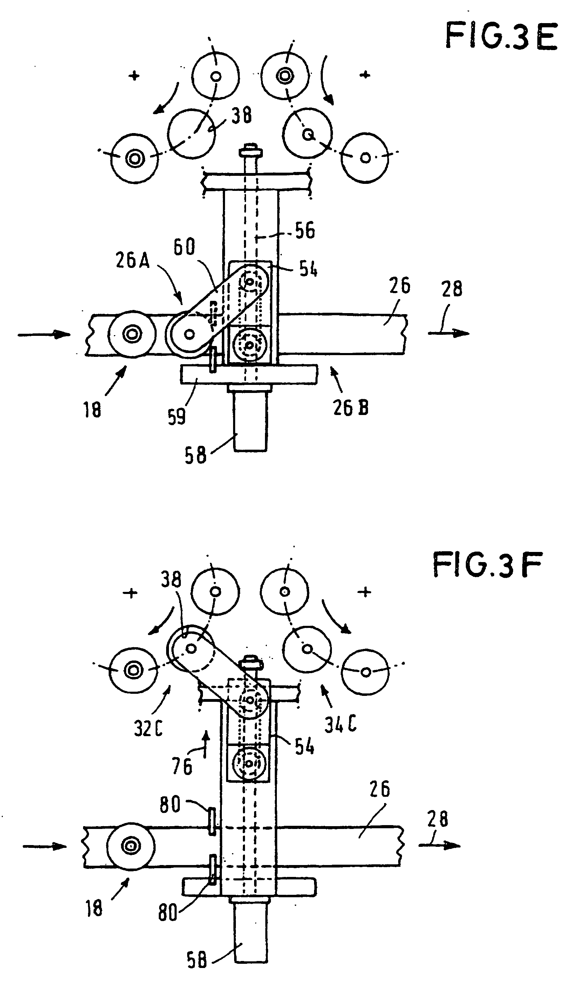

Der Schlitten 54 ist zwischen der in Fig. 3A dargestellten, den beiden Drehtellern 32, 34 zugekehrten ersten Endposition (vgl. auch Fig. 3C, 3D und 3F) und der in Fig. 3B dargestellten zweiten Endposition (vgl. auch Fig. 3E) verschiebbar.

Der Schwenkarm 60 ist so dimensioniert und angeordnet, daß der an seinem freien Ende angebrachte Greifer 72 der Zylinder-Kolben-Einheit 70 in Abhängigkeit von der Winkellage des Schwenkarms relativ zum Schlitten 54 bei in der ersten Endposition befindlichem Schlitten 54 oberhalb der dem Drehteller 32 zugeordneten Wechselstation 32C (Fig. 3C und Fig. 3F) bzw. oberhalb eines in dieser Station vorhandenen Magazins oder oberhalb der dem Drehteller 34 zugeordneten Wechselstation 34C bzw. oberhalb eines in einen dieser Stationen vorhandenen Magazins positioniert ist, und zwar derart, daß der Greifer 72 im wesentlichen koaxial zum Dorn 24 des jeweiligen Magazins verläuft.

Nachdem Schlitten 54 und Schwenkarm 60 die in Fig. 3A dargestellte Position einnehmen und in der Wechselstation 34C ein Magazin vorhanden ist, welches zuvor in der Sammelstation 34A gefüllt worden war, kann durch entsprechende Betätigung der Zylinder-Kolben-Einheit 70 der Greifer 72 nach unten bewegt werden derart, daß der obere Endbereich des Dornes 24 dieses Magazins innerhalb des Greifers sich befindet. Nachdem letzterer geschlossen worden ist und den Dorn erfaßt hat, wird der Greifer durch entsprechende Betätigung der Zylinder-Kolben-Einheit 70 angehoben, wodurch das Magazin mitgenommen und aus seiner Halterung im Drehteller 34 soweit herausgehoben wird, daß es mit dem Drehteller außer Eingriff ist und auch bei den folgenden Transportbewegungen nicht mit irgendwelchen anderen Teilen der Maschine in Kollision gerät. Alsdann wird durch entsprechende Betätigung des E-Motors 58 der Schlitten 54 in Richtung des Pfeiles 74 in die zweite Endposition verschoben, welche dem Förderband 26 zugekehrt ist. Vorzugsweise gleichzeitig mit dieser Bewegung des Schlittens 54 wird der Schwenkarm 60 durch entsprechende Betätigung des E-Motors 62 aus der Lage relativ zum Schlitten 54 gemäß Fig. 3A, in die Lage gemäß Fig. 3B verschwenkt, in welcher sich der Greifer 70 oberhalb des Transportbandes 26 befindet, so daß bei Absenken des Greifers 72 durch entsprechende Betätigung der Einheit 70 das Magazin 18 in der Absetzstation 26B auf dem Förderband 26 aufgesetzt wird. Bei der Schwenkbewegung zwischen der Position gemäß Fig. 3A und der gemäß Fig. 3B, die etwa 90° beträgt, erfährt der Schwenkarm gegenüber dem ihn tragenden Schlitten 54 eine Verschwenkung von etwa 90°, wobei der Schwenkarm auf derselben Seite der durch die Bewegungsbahn des Schlittens 54 definierten Symmetrieebene bleibt.

Nachdem der Greifer 72 das Magazin freigegeben hat, wird er nach oben bewegt. Der Schlitten 54 wird ggf. gleichzeitig in Richtung des Pfeiles 76 in die erste Position zurückbewegt. Während dieser Bewgeung kann der Schwenkarm 60 relativ zum Schlitten 54 um 90° verschwenkt werden, so daß er am Ende der Linearbewegung etwa wieder die Position gemäß Fig. 3A einnimmt. Danach erfolgt eine weitere Verschwenkung des Schwenkarmes 60 um etwa 90° in die Position gemäß Fig. 3C, in deren Verlauf der Schwenkarm 60 auf die andere Seite der vorerwähnten Symmetrieebene gelangt, auf welcher der Drehteller 32 angeordnet ist. Wie im einzelnen die Verschwenkung des Schwenkarmes 60 aus der Position gemäß Fig. 3B in die gemäß Fig. 3C erfolgt, hängt unter anderem auch davon ab, wie hoch der Schwenkarm 60 oberhalb der Halterung 59 für den Schlitten 54 angeordnet ist. Bei dem in der Zeichnung dargestellten Ausführungsbeispiel (vgl. Fig. 1) würde die Bewegung des Schwenkarmes 60 von der einen Seite der Symmetrieachse auf die andere jeweils nur dann möglich sein, wenn der Schlitten 54 sich in oder nahe der ersten Endposition gemäß Fig. 3A, 3C, 3D und 3F befindet.

In der Position gemäß Fig. 3C ist der vom Schwenkarm 60 getragene Greifer 72 zu der jeweils in der Wechselstation 32C befindlichen Halterung 38 bzw. dem darin jeweils befindlichen Magazin koaxial ausgerichtet. Der offene Greifer 72 wird abgesenkt, so daß das obere Ende des Dornes 24 in den Bereich des Greifers gelangt, woraufhin dieser geschlossen wird und dabei das obere Ende des Dornes 24 erfaßt. Danach wird der Greifer angehoben, so daß das Magazin außer Eingriff mit der jeweils in der Wechselstation 32C befindlichen Halterung 38 kommt. Alsdann wird der Schwenkarm 60 aus der Position gemäß Fig. 3C in die gemäß Fig. 3D verschwenkt, welche der Position gemäß Fig. 3A entspricht. Der Greifer wird abgesenkt, um das von ihm gehaltene leere Magazin in die in der Wechselstation 34C jeweils befindliche Halterung 34 einzusetzen. Danach wird der Greifer geöffnet und nach oben verfahren, worauf der Schwenkarm 60 in die Position gemäß Fig. 3C leer, also ohne Magazin, verschwenkt wird.

Dann wird der Schlitten 54 in die Position gemäß Fig. 3E bewegt. Während dieser Bewegung erfolgt eine weitere Verschwenkung des Schwenkarmes 60 um etwa 90° in Richtung auf das Förderband 26 derart, daß bei in der zweiten Position gemäß Fig. 3E befindlichem Schlitten 54 der Greifer 70 sich oberhalb eines Magazines mit zu bedruckenden CDs befindet, welches auf dem Förderband 26 in der diesem zugeordneten Aufnahmestation 26A steht. Die Aufnahmestation 26A wird im wesentlichen definiert durch ein Anschlagpaar 80, welches oberhalb des Förderbandes 26 in die Bewegungsbahn der darauf befindlichen Magazine 18 hineinragt und die Position des in Transportrichtung jeweils ersten Magazins 18 mit zu bedruckenden CDs bestimmt. Dieses Anschlagpaar kann stationär angeordnet sein, da es das Ende der durch das Förderband 26 definierten Transportbahn für die Magazine 18 mit zu bedruckenden CDs bestimmt.

Das in der Aufnahmestation 26A befindliche Magazin wird in der bereits beschriebenen Weise am oberen Ende seines Dornes 24 erfaßt und vom Band 26 abgehoben, worauf dann der Schlitten 54 in Richtung des Pfeiles 76 in die erste Position verfahren wird, wobei ggf. gleichzeitig der Schwenkarm 60 gegenüber dem Schlitten 54 eine Verschwenkung um etwa 90° erfährt derart, daß er, wenn der Schlitten 54 die erste Position einnimmt, mit dem Greifer und dem daran hängenden Magazin gemäß Fig. 3F oberhalb der jeweils in der Wechselstation 32C befindlichen Halterung 38 positioniert ist, in die das Magazin in der bereits beschriebenen Weise abgesetzt wird.

Nachdem, wie ebenfalls bereits beschrieben, im vorangegangenen Schritt gemäß Fig. 3D ein leeres Magazin 18 in die in der Wechselstation 34C befindliche Halterung eingesetzt und anschließend der Greifer geöffnet und nach oben außer Eingriff mit dem Dorn 24 des Magazins bewegt worden war, ist der Drehteller 34 in Richtung des Pfeiles 36 um einen Schritt weiterbewegt worden, sobald das zu diesem Zeitpunkt in der Sammelstation 34A befindliche Magazin mit bedruckten CDs gefüllt worden war, so daß am Ende dieses Schaltschrittes das entgegen der Rotationsrichtung 36 folgende Magazin 18a (Fig. 3D) in die Wechelstation 34C gelangt und das vorher in die Halterung der Wechelstation 34C eingesetzte leere Magazin die Position des in Rotationsrichtung 36 folgenden Magazins 18b einnimmt. Somit kann der Schwenkarm 60, der gemäß dem oben beschriebenen Arbeitssablauf soeben ein Magazin mit zu bedruckenden Objekten in die jeweils in der Wechselstation 32C befindliche Halterung abgesetzt hatte, aus der Position gemäß Fig. 3F um etwa 90° leer in die Position gemäß Fig. 3A verschwenkt werden, um das folgende Magazin aus der nunmehr in der Wechselstation 34C befindliche Halterung herauszuheben und in die im Zusammenhang mit den Fig. 3A und 3B beschriebenen Weise in die dem Förderband 26 zugeordnete Absetzstation 26B zu transportieren. Mit diesen Schritten wird der folgende Arbeitszyklus begonnen. Die in den Halterungen in Rotationsrichtung 36 zwischen der Wechselstation 34C und der Sammelstation 34A befindlichen leeren Magazine stellen einen Puffer dar, um sicherzustellen, daß immer ausreichend leere Magazine zum Aufnehmen der bedruckten CDs in der Sammelstation 34A vorhanden sind.

Der Drehteller 32 kann um einen Schaltschritt in Richtung des Pfeiles 35 weiterbewegt werden, sobald das leere Magazin 18 aus der letzten Station 32C herausgehoben und durch die Schwenkbewegung des Schwenkarmes 60 in die Position gemäß Fig. 3D aus dem Bewegungsbereich der auf dem Drehteller 32 befindlichen Magazine gebracht worden ist. Die in Drehrichtung 35 zwischen der Wechselstation 32C und der Vereinzelungsstation 32A befindlichen, mit unbedruckten CDs gefüllten Magazinen dienen als Puffer, um sicherzustellen, daß in der Vereinzelungsstation 32A immer ein gefülltes Magazin vorhanden ist.

Der Abschnitt des Förderbandes 26 für die Magazine mit zu bedruckenden Objekten kann mit weiteren Anschlagpaaren 82, 84 versehen sein, die jeweils zwischen einer wirksamen Position, in welcher in die Bewegungsbahn der Magazine 18 für die zu bedruckenden Objekte hineinragen, und einer unwirksamen Position hin- und herbewegbar sind. Diese Anschlagpaare dienen im wesentlichen dazu sicherzustellen, daß das jeweils in der Aufnahmestation 26A befindliche Magazine einen Abstand von den folgenden Magazinen aufweist und somit frei bewegbar ist, nachdem es vom Greifer 72 ergriffen worden ist. Der Antrieb für das Öffnen und Schließen des Greifers 72 ist in der Zeichnung nicht gesondert dargestellt. Der Fachmann weiß, welche Antriebsmittel dafür verfügbar sind.

Das Förderband 26 kann kontinuierlich oder diskontinuierlich umlaufen. Da zwischen dem Abnehmen und Aufsetzen der Magazine vom bzw. auf das Band 26 immer bestimmbare Zeitabstände vorhanden sind, die durch die Durchsatzleistung der Druckmaschine bestimmt werden, wird es im allgemeinen zweckmäßig sein, das Förderband 26 diskontinuierlich laufen zu lassen. Bei kontinuierlichem Lauf könnte es zweckmäßig sein, in der Aufsetzstation 26B ebenfalls einen lösbaren Anschlag vorzusehen, welcher beim Aufsetzen des Magazins dessen Mitnahme durch das Förderband verhindert und erst entfernt wird, wenn der Aufsetzvorgang beendet und das Magazin vom Greifer 72 freigegeben worden ist.

Anstelle des einen durchlaufenden Förderbandes 26 für alle Magazine können auch zwei hintereinander angeordnete Förderbänder vorgesehen sein, von denen das in Transportrichtung 28 erste Förderband die Magazine für die zu bedruckenden Objekte aufnimmt und sich etwa bis zum Linearförderer 30 erstreckt, wohingegen das zweite Förderband etwa am Linearförderer 30 beginnt und die mit den bedruckten Objekten gefüllten Magazine aufnimmt und weg transportiert.

Der für das Vereinzeln bzw. Sammeln der CDs eines Magazins erforderliche Zeitraum ist auch bei hoher Durchsatzleistung der Druckmaschine so groß, daß die vorbeschriebenen Bewegungen der zusammenwirkenden Förder- und Transportmittel durchgeführt werden können, ohne daß dadurch eine nachteilige Beeinflussung der Durchsatzleistung der Gesamtvorrichtung eintritt.

Wenngleich das vorstehend beschriebene und in der Zeichnung dargestellte Ausführungsbeispiel zum Bedrucken von CDs dient, ist die Anwendung der Erfindung auf derartige Objekte nicht beschränkt. Ferner ist die Erfindung nicht nur auf Druckmaschinen anwendbar, sondern allgemein auf solche Maschinen, bei denen Objekte einer bestimmten Einrichtung zum Behandeln derselben zugeführt und nach der Behandlung wieder weggeführt werden müssen.

## Patentansprüche

1. Einrichtung zum Zuführen und/oder Wegführen von für die Aufnahme von einzelnen Objekten bestimmten Magazinen (18) an einer Vorrichtung zum Behandeln und/oder Handhaben dieser Objekte, wobei die Vorrichtung mit einem ersten Transportelement (32), das einen Vorrat an Magazinen (18) zum Zuführen von zu behandelnden Objekten aufnimmt, und einem zweiten Transportelement (34) versehen ist, das einen Vorrat an Magazinen zum Wegführen von behandelten Objekten aufnimmt, und beide Transportelemente (32, 34) nebeneinander angeordnet und jeweils in horizontaler Ebene bewegbar sind, **dadurch gekennzeichnet, dass** erstem und zweitem Transportelement (32, 34) ein drittes Transportelement (30) zugeordnet ist, welches zwischen einer erstem und zweitem Transportelement zugekehrten ersten Position und wenigstens einer erstem und zweitem Transportelement abgekehrten zweiten Position bewegbar ist und wenigstens einen bewegbaren Träger (60) für wenigstens ein Magazin (18) aufweist, der bei in der ersten Position befindlichem dritten Transportelement (30) zwischen einer dem ersten Transportelement (32) zugeordneten ersten Position zum Aufnehmen eines Magazins (18) von demselben oder zum Absetzen eines Magazins auf dasselbe und einer dem zweiten Transportelement (34) zugeordneten zweiten Position zum Aufnehmen eines Magazins (18) von demselben oder zum Absetzen eines Magazins auf dasselbe bewegbar ist, und bei in der zweiten Position befindlichem dritten Transportelement (30) eine dritte Position (26A) zum Aufnehmen eines Magazins (18) für zu behandelnde Objekte und eine vierte Position (26B) zum Absetzen eines Magazins für behandelte Objekte einnimmt.

2. Einrichtung nach Anspruch 1, **dadurch gekennzeichnet, dass** der Träger (60) bei in der ersten Position befindlichem dritten Transportelement (30) relativ zu diesem eine andere Position einnimmt als bei in der zweiten Position befindlichem dritten Transportelement (30).

3. Einrichtung nach Anspruch 1, **dadurch gekennzeichnet, dass** erste und dritte Position des Trägers (60) einerseits und zweite und vierte Position des Trägers (60) andererseits jeweils an unterschiedlichen Seiten einer durch den Transportweg des dritten Transportelementes definierten vertikalen Ebene angeordnet sind.

4. Einrichtung nach Anspruch 1, **dadurch gekennzeichnet, dass** das in der dritten Position des Trägers (60) von diesem aufgenommene Magazin (18) in der ersten Position des Trägers abgesetzt wird.

5. Einrichtung nach Anspruch 1, **dadurch gekennzeichnet, dass** das in der zweiten Position des Trägers (60) von diesem aufgenommene Magazin (18) in der vierten Position des Trägers abgesetzt wird.

6. Einrichtung nach Anspruch 1, **dadurch gekennzeichnet, dass** dritte und vierte Position des Trägers übereinstimmen.

7. Einrichtung nach Anspruch 1, **dadurch gekennzeichnet, dass** erstes und zweites Transportelement (32, 34) schrittweise rotieren und Halterungen (38) für die jeweiligen Magazine aufweisen.

8. Einrichtung nach Anspruch 1, **dadurch gekennzeichnet, dass** das dritte Transportelement (30) hin- und herbewegbar angeordnet ist.

9. Einrichtung nach Anspruch 1, **dadurch gekennzeichnet, dass** der Träger (60) als ein am dritten Transportelement (30) vorzugsweise in horizontaler Ebene schwenkbar angebrachtees Teil ausgebildet ist.

10. Einrichtung nach Anspruch 1, **dadurch gekennzeichnet, dass** der Träger (60) mit einem Greiforgan (72) versehen ist, welches das jeweilige Magazin (18) erfasst.

11. Einrichtung nach Anspruch 1, **dadurch gekennzeichnet, dass** der Träger vertikal verschiebbar am Schlitten angebracht ist.

12. Einrichtung nach Anspruch 1, **dadurch gekennzeichnet, dass** das Greiforgan (72) unter Zwischenschaltung eines eine vertikale Verschiebung des Greiforgans (72) bewirkenden Mittels (70) am Träger (60) angebracht ist.

13. Einrichtung nach Anspruch 9, **dadurch gekennzeichnet, dass** das die vertikalen Bewegungen bewirkende Mittel als Kolben-Zylinder-Einheit (70) ausgebildet ist.

14. Einrichtung nach Anspruch 1, **dadurch gekennzeichnet, dass** der erstem und zweitem Transportelement (32, 34) abgekehrten zweiten Position des dritten Transportelements (30) wenigstens ein viertes Transportelement (26) für zu behandelnde Objekte aufweisende Magazine (18) und/oder die behandelten Objekte aufweisenden Magazine zugeordnet ist derart, dass der mit der Greifeinrichtung (72) versehene Träger (60) in der zweiten Position des dritten Transportelements ein auf dem vierten Transportelement befindliches Magazin (18) für zu behandelnde Objekte aufnimmt bzw. ein Magazin für behandelte Objekte auf dem vierten Transportelement absetzt.

15. Einrichtung nach Anspruch 14, **dadurch gekennzeichnet, dass** für das Zufördern der von erstem Transportelement (32) aufzunehmenden Magazine und für das Wegfördern der vom zweiten Transportelement (34) abgenommene Magazine ein gemeinsames viertes Transportelement (26) vorzugsweise in Form eines Förderbandes vorgesehen ist.

16. Einrichtung nach Anspruch 1, **dadurch gekennzeichnet, dass** der als Schwenkarm (60) ausgebildete Träger während der Bewegung des dritten Transportelements (30) zwischen dessen erster und zweiter Position und dem vierten Transportelement (26) jeweils eine Verschwenkung erfährt.

17. Einrichtung nach Anspruch 12, **dadurch gekennzeichnet, dass** das Greiforgan des Trägers am freien Ende eines Dorns (24) des Magazins (18) angreift, auf welcher die Einzelobjekte aufgesteckt sind.

## Claims

1. An arrangement for feeding and/or removing magazines (18) intended to receive individual articles to and from an apparatus for treating and/or handling said articles, wherein the apparatus is provided with a first transport element (32) which receives a supply of magazines (18) for feeding articles to be treated and a second transport element (34) which receives a supply of magazines for the removal of treated articles, and both transport elements (32, 34) are arranged in mutually juxtaposed relationship and each movable in a respective horizontal plane, **characterised in that** associated with the first and second transport elements (32, 34) is a third transport element (30) which is movable between a first position towards the first and second transport elements and at least one second position away from the first and second transport elements and has at least one movable carrier (60) for at least one magazine (18), which, when the third transport element (30) is in the first position, is movable between a first position associated with the first transport element (32) for receiving a magazine (18) therefrom or for depositing a magazine thereon and a second position associated with the second transport element (34) for receiving a magazine (18) therefrom or for depositing a magazine thereon and, when the third transport element (30) is in the second position, the carrier assumes a third position (26A) for receiving a magazine (18) for articles to be treated and a fourth position (26B) for depositing a magazine for treated articles.

2. An arrangement according to claim 1 **characterised in that**, when the third transport element (30) is in the first position, the carrier (60) assumes relative thereto a different position from when the third transport element (30) is in the second position.

3. An arrangement according to claim 1 **characterised in that** the first and third positions of the carrier (60) on the one hand and the second and fourth positions of the carrier (60) on the other hand are arranged at respective different sides of a vertical plane defined by the transport path of the third transport element.

4. An arrangement according to claim 1 **characterised in that** the magazine (18) which in the third position of the carrier (60) is received thereby is deposited in the first position of the carrier.

5. An arrangement according to claim 1 **characterised in that** the magazine (18) which in the second position of the carrier (60) is received thereby is deposited in the fourth position of the carrier.

6. An arrangement according to claim 1 **characterised in that** the third and fourth positions of the carrier are the same.

7. An arrangement according to claim 1 **characterised in that** the first and second transport elements (32, 34) rotate stepwise and have holders (38) for the respective magazines.

8. An arrangement according to claim 1 **characterised in that** the third transport element (30) is arranged reciprocatably.

9. An arrangement according to claim 1 **characterised in that** the carrier (60) is in the form of a member mounted on the third transport element (30) preferably pivotably in a horizontal plane.

10. An arrangement according to claim 1 **characterised in that** the carrier (60) is provided with a gripping member (72) which grips the respective magazine (18).

11. An arrangement according to claim 1 **characterised in that** the carrier is mounted vertically displaceably to the carriage.

12. An arrangement according to claim 1 **characterised in that** the gripping member (72) is mounted to the carrier (60) with the interposition of a means (70) producing vertical displacement of the gripping member (72).

13. An arrangement according to claim 9 **characterised in that** the means producing the vertical movements is in the form of a piston-cylinder unit (70).

14. An arrangement according to claim 1 **characterised in that** associated with the second position of the third transport element (30) away from the first and second transport elements (32, 34) is at least one fourth transport element (26) for magazines (18) having articles to be treated and/or magazines having the treated articles, in such a way that in the second position of the third transport element the carrier (60) provided with the gripping device (72) receives a magazine (18) disposed on the fourth transport element for articles to be treated or deposits a magazine for treated articles on the fourth transport element.

15. An arrangement according to claim 14 **characterised in that** there is provided a common fourth transport element (26), preferably in the form of a conveyor belt, for feeding the magazines to be received by the first transport element (32) and for conveying away the magazines removed from the second transport element (34).

16. An arrangement according to claim 1 **characterised in that** the carrier which is in the form of a pivotal arm (60) respectively performs a pivotal movement during the movement of the third transport element (30) between its first and second positions and the fourth transport element (26).

17. An arrangement according to claim 12 **characterised in that** the gripping member of the carrier engages a free end of a spindle (24) of the magazine (18), on which end the individual articles are fitted.

## Revendications

1. Dispositif d'approvisionnement et/ou d'évacuation de magasins (18) réglés pour la réception d'objets individuels sur un dispositif destiné à manipuler et/ou actionner ces objets, le dispositif étant pourvu d'un premier élément de transport (32) qui reçoit une réserve sur des magasins (18) pour approvisionner des objets à manipuler, et d'un deuxième élément de transport (34) qui reçoit une réserve sur des magasins pour évacuer des objets manipulés, et les deux éléments de transport (32, 34) étant disposés côte à côte et déplaçables respectivement sur un plan horizontal, **caractérisé en ce qu'**un troisième élément de transport (30) est attribué aux premier et deuxième éléments de transport (32, 34), lequel est déplaçable entre une première position adjacente aux premier et deuxième éléments de transport et au moins une deuxième position éloignée des premier et deuxième éléments de transport, et comprenant au moins un support (60) déplaçable pour au moins un magasin (18), support déplaçable dans le cas du troisième élément de transport (30) se trouvant dans la première position entre une première position attribuée au premier élément de transport (32) destiné à la réception d'un magasin (18) du même ou à l'évacuation d'un magasin sur le même et une deuxième position attribuée au deuxième élément de transport (34) destinée à la réception d'un magasin (18) du même ou l'évacuation d'un magasin sur le même, et qui, dans le cas du troisième élément de transport (30) se trouvant dans la deuxième position, adopte une troisième position (26A) pour la réception d'un magasin (18) pour objets à manipuler et une quatrième position (26B) pour l'évacuation d'un magasin pour objets manipulés.

2. Dispositif selon la revendication 1, **caractérisé en ce que** le support (60) adopte, dans le cas du troisième élément de transport (30) se trouvant dans la première position, une autre position par rapport à celui-ci que dans le cas du troisième élément de transport (30) se trouvant dans la deuxième position.

3. Dispositif selon la revendication 1, **caractérisé en ce que** les première et troisième positions du support (60) d'une part, et les deuxième et quatrième positions du support (60) d'autre part sont respectivement disposées sur différents côtés d'un plan vertical défini par la course du troisième élément de transport.

4. Dispositif selon la revendication 1, **caractérisé en ce que** le magasin (18) reçu dans la troisième position du support (60) de celui-ci est évacué dans la première position du support.

5. Dispositif selon la revendication 1, **caractérisé en ce que** le magasin (18) reçu dans la deuxième position du support (60) de celui-ci est évacué dans la quatrième position du support.

6. Dispositif selon la revendication 1, **caractérisé en ce que** les troisième et quatrième positions du support concordent.

7. Dispositif selon la revendication 1, **caractérisé en ce que** les premier et deuxième éléments de transport (32, 34) pivotent progressivement et comprennent des fixations (38) pour les magasins respectifs.

8. Dispositif selon la revendication 1, **caractérisé en ce que** le troisième élément de transport (30) est disposé de manière à pouvoir être déplacé vers l'avant et vers l'arrière.

9. Dispositif selon la revendication 1, **caractérisé en ce que** le support (60) est conçu comme une pièce fixée de manière rotative sur le troisième élément de transport (30), de préférence sur un plan horizontal.

10. Dispositif selon la revendication 1, **caractérisé en ce que** le support (60) est pourvu d'un organe préhenseur (72), lequel saisit le magasin (18) respectif.

11. Dispositif selon la revendication 1, **caractérisé en ce que** le support est fixé verticalement et de façon coulissante.

12. Dispositif selon la revendication 1, **caractérisé en ce que** l'organe préhenseur (72) est fixé au support (60) en intercalant un moyen (70) provoquant un déplacement vertical de l'organe préhenseur (72).

13. Dispositif selon la revendication 9, **caractérisé en ce que** le moyen provoquant le déplacement vertical est conçu comme une unité de cylindre à piston (70).

14. Dispositif selon la revendication 1, **caractérisé en ce qu'**au moins un quatrième élément de transport (26) pour des magasins (18) comprenant des objets à manipuler et/ou pour les magasins comprenant des objets manipulés est attribué à la deuxième position éloignée des premier et deuxième éléments de transport (32, 34) du troisième élément de transport (30), de telle sorte que le support (60) pourvu du dispositif préhenseur (72) dans la deuxième position du troisième élément de transport reçoive un magasin (18) se trouvant sur le quatrième élément de transport et/ou évacue un magasin pour des objets manipulés sur le quatrième élément de transport.

15. Dispositif selon la revendication 14, **caractérisé en ce qu'**un quatrième élément de transport (26) commun est prévu, de préférence sous la forme d'une courroie de transport, pour l'approvisionnement des magasins recevant du premier élément de transport (32) et pour l'évacuation des magasins déchargés par le deuxième élément de transport (34).

16. Dispositif selon la revendication 1, **caractérisé en ce que** le support conçu comme un bras articulé (60) connaît respectivement un pivotement pendant le mouvement du troisième élément de transport (30) entre ses première et deuxième positions et le quatrième élément de transport.

17. Dispositif selon la revendication 12, **caractérisé en ce que** l'organe préhenseur du support est appliqué à l'extrémité libre d'un mandrin (24) du magasin (18), sur lequel les objets individuels sont montés.
